# DEMANDE DE BREVET EUROPEEN

(11) **EP 1 995 274 A1**
(43) Date de publication de la demande: **26.11.2008**
(21) Numéro de dépôt: 08156325.6
(22) Date de dépôt: 16.05.2008
(51) Int. Cl.: C08K 7/24, C08K 9/04, C08K 9/08

(54) **Procédé de préparation de pré-composites à base de nanotubes, notamment de carbone**

(30) Priorité: 22.05.2007 FR 0703621
(71) Demandeur: ARKEMA FRANCE, 92700 Colombes (FR)
(72) Inventeur: Piccione, Patrick, 64000 PAU (FR); Korzhenko, Alexander, 27800 SAINT VICTOR D'EPINE (FR); Brule, Benoît, 27170 BEAUMONT LE ROGER (FR)
(74) Mandataire: Cabinet Plasseraud

(57) **Abrégé**

La présente invention a pour objet un procédé de préparation d'un pré-composite à base de nanotubes, comprenant la mise en contact desdits nanotubes avec au moins un agent plastifiant donné.

Elle se rapporte également au pré-composite ainsi obtenu, ainsi qu'à son utilisation pour conférer au moins une propriété électrique, mécanique et/ou thermique à un matériau polymère.

Elle concerne également l'utilisation d'un plastifiant donné pour améliorer la dispersion et/ou les propriétés mécaniques et/ou la conductivité électrique et/ou la conductivité thermique de nanotubes dans une matrice polymère.

## Description

La présente invention concerne un procédé de préparation de pré-composites à base de nanotubes, notamment de carbone, certains des pré-composites ainsi obtenus et l'utilisation de ces pré-composites pour former des composites.

Les nanotubes de carbone (ou NTC) sont connus et possèdent des structures cristallines particulières, de forme tubulaire, creuses et closes, composées d'atomes disposés régulièrement en pentagones, hexagones et/ou heptagones, obtenues à partir de carbone. Les NTC sont en général constitués d'un ou plusieurs feuillets de graphite enroulés. On distingue ainsi les nanotubes monoparois (Single Wall Nanotubes ou SWNT) et les nanotubes multiparois (Multi Wall Nanotubes ou MWNT).

Les NTC sont disponibles dans le commerce ou peuvent être préparés par des méthodes connues. Il existe plusieurs procédés de synthèse de NTC, notamment la décharge électrique, l'ablation laser et le dépôt chimique en phase vapeur ou CVD (Chemical Vapour Déposition) qui permet d'assurer la fabrication en grande quantité de nanotubes de carbone et donc leur obtention à un prix de revient compatible avec leur utilisation massive. Ce procédé consiste précisément à injecter une source de carbone à relativement haute température sur un catalyseur qui peut lui-même être constitué d'un métal tel que le fer, le cobalt, le nickel ou le molybdène, supporté sur un solide inorganique tel que l'alumine, la silice ou la magnésie. Les sources de carbone peuvent comprendre le méthane, l'éthane, l'éthylène, l'acétylène, l'éthanol, le méthanol, voire un mélange de monoxyde de carbone et d'hydrogène (procédé HIPCO).

Ainsi la demande WO 86/03455A1 d'Hyperion Catalysis International Inc. décrit notamment la synthèse des NTC. Plus particulièrement, le procédé comprend la mise en contact d'une particule à base de métal tel que notamment le fer, le cobalt ou le nickel, avec un composé gazeux à base de carbone, à une température comprise entre environ 850°C et 1200°C, la proportion en poids sec du composé à base de carbone par rapport à la particule à base de métal étant d'au moins environ 100 :1.

D'un point de vue mécanique, les NTC présentent à la fois une excellente rigidité (mesurée par le module d'Young), comparable à celle de l'acier, tout en étant extrêmement légers. En outre, ils présentent d'excellentes propriétés de conductivité électrique et thermique qui permettent d'envisager de les utiliser comme additifs pour conférer ces propriétés à divers matériaux, notamment macromoléculaires, tels que les polyamides, le polycarbonate, les polyesters, le polystyrène, les polyéthyléther cétones et la polyéthylène imine, ainsi que d'autres polymères thermoplastiques et thermodurs.

Toutefois, les NTC s'avèrent difficiles à manipuler et à disperser, en raison de leur faible taille, de leur pulvérulence et éventuellement, lorsqu'ils sont obtenus par la technique de CVD, de leur structure enchevêtrée, d'autant plus importante que l'on cherche à augmenter leur productivité massique aux fins d'améliorer la production et de réduire le taux de cendres résiduelles. L'existence de fortes interactions de Van der Waals entre les nanotubes nuit également à leur dispersibilité et à la stabilité des suspensions obtenues.

La mauvaise dispersibilité des NTC affecte de manière importante les caractéristiques des composites qu'ils forment avec les matrices polymères dans lesquelles ils sont introduits. On observe en particulier l'apparition de nanofissures, se formant au niveau d'aggrégats de nanotubes, qui conduisent à une fragilisation du composite. Par ailleurs, dans la mesure où les NTC sont mal dispersés, il est nécessaire d'augmenter leur taux pour atteindre une conductivité électrique et/ou thermique donnée, ce qui a pour effet d'augmenter la viscosité du mélange dans la filière de fabrication du composite, résultant en un auto-échauffement de ce mélange pouvant conduire à une dégradation du polymère et à une réduction de la productivité (diminution des vitesses de ligne pour limiter la pression engendrée par la viscosité du produit).

Pour remédier à ces inconvénients, il a déjà été proposé différentes solutions dans l'état de la technique. Parmi celles-ci, on peut citer la sonication, qui n'a toutefois qu'un effet temporaire, ou l'ultrasonication qui a pour effet de couper en partie les nanotubes et de créer des fonctions oxygénées pouvant affecter certaines de leurs propriétés.

Il a en outre été suggéré de procéder à des mélanges dans un solvant de NTC avec des agents dispersants tels que des tensioactifs dont le dodécylsulfate de sodium (EP-1 495 171 ; VIGOLO B. et al, Science, 290 (2000), 1331 ; WANG J. et al, J. of Chem. Society, 125, (2003), 2408 ; MOORE, V.C. et al, Nanoletters, 3, (2003), 2408) ou des tensioactifs polyéthoxylés (JP2005-154630). Ces derniers ne permettent cependant pas de disperser de grandes quantités de NTC, des dispersions satisfaisantes ne pouvant être obtenues que pour des concentrations en NTC de moins de 2 ou 3 g/l. En outre, les tensioactifs sont susceptibles de désorber entièrement de la surface des NTC lors de l'étape de dialyse généralement mise en oeuvre pour éliminer l'excès de tensioactif dans la solution, ce qui a pour effet de déstabiliser la suspension obtenue.

Dans le même ordre d'idées, la demande JP2007-077370 divulgue un dispersant de nanotubes de carbone dans une résine thermoplastique, constitué d'un ester d'acide laurique, trimellitique, myristique ou stéarique.

Une autre solution, proposée notamment dans les demandes EP-1 359 121 et EP-1 359 169, a consisté à réaliser une dispersion de NTC dans un solvant et un monomère et de procéder à une polymérisation *in situ* conduisant à l'obtention de NTC fonctionnalisés. Cette solution est toutefois complexe et peut s'avérer coûteuse en fonction des produits utilisés. Par ailleurs, les opérations de greffage risquent d'abîmer la structure des nanotubes et, par conséquent, leurs propriétés électriques et/ou mécaniques (GARG A. et al, Chem. Phys. Lett. 295, (1998), 273).

Des exemples de tels procédés de greffage ont notamment été décrits par HADDON et al dans Science, (1998), 282, p. 95-98 et J. Phys. Chem., B2001, 105, p. 2525-2528 ; SUN et al dans Chem. Mater., 2001, 13, p. 2864-2869 ; CHEN et al. dans Carbon, (2005), 43, 1778-1814 ; QUIN et al dans Macromolecules, 2004, 37, p. 752-757 ; ZHANG et al. dans Chem. Mater., 16(11) (2004), 2055-2061.

Il subsiste donc le besoin de proposer un procédé simple et peu coûteux, permettant de préparer des dispersions homogènes de nanotubes, notamment de carbone, éventuellement à haute concentration, dans des matériaux polymères, sans affecter sensiblement les propriétés mécaniques et électriques des nanotubes.

La Demanderesse a découvert que ce besoin pouvait être satisfait par la mise en oeuvre d'un procédé comprenant la mise en contact de nanotubes avec un agent plastifiant donné, pour former un pré-composite qui peut ensuite être introduit dans une matrice polymère.

La présente invention a ainsi pour objet un procédé de préparation d'un pré-composite à base de nanotubes, comprenant la mise en contact desdits nanotubes avec au moins un agent plastifiant choisi parmi .
- les alkylesters de phosphates, d'acide hydroxybenzoïque (dont le groupe alkyle, de préférence linéaire, renferme de 1 à 20 atomes de carbone), d'acide azélaïque et d'acide pélargonique,
- les phtalates, notamment de dialkyle ou d'alkylaryle, en particulier d'alkylbenzyle, les groupes alkyles, linéaires ou ramifiés, renfermant indépendamment de 1 à 12 atomes de carbone,
- les adipates, notamment de dialkyles,
- les sébacates, notamment de dialkyles et en particulier de dioctyle,
- les benzoates de glycols ou de glycérol,
- les éthers de dibenzyle,
- les chloroparaffines,
- le carbonate de propylène,
- les sulfonamides, en particulier les aryl sulfonamides dont le groupe aryle est éventuellement substitué par au moins un groupe alkyle contenant de 1 à 6 atomes de carbone, telles que les benzene sulfonamides et les toluene sulfonamides, qui peuvent être N-substituées ou N,N-disubstituées par au moins un groupe alkyle, de préférence linéaire, renfermant de 1 à 20 atomes de carbone,
- et leurs mélanges.

Les nanotubes utilisables selon l'invention peuvent être des nanotubes de carbone (ci-après, NTC) ou des nanotubes à base de bore, de phosphore ou d'azote, ou encore des nanotubes renfermant plusieurs de ces éléments ou l'un au moins de ces éléments en combinaison avec du carbone. Il s'agit avantageusement de nanotubes de carbone. Ils peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456.

Les nanotubes mis en oeuvre selon l'invention ont habituellement un diamètre moyen allant de 0,1 à 200 nm, de préférence de 0,1 à 100 nm, plus préférentiellement de 0,4 à 50 nm et, mieux, de 1 à 30 nm et avantageusement une longueur de plus de 0,1 µm et avantageusement de 0,1 à 20 µm, par exemple d'environ 6 µm. Leur rapport longueur/diamètre est avantageusement supérieur à 10 et le plus souvent supérieur à 100. Ces nanotubes comprennent donc notamment les nanotubes dits "VGCF" (fibres de carbone obtenues par dépôt chimique en phase vapeur, ou Vapor Grown Carbon Fibers). Leur surface spécifique est par exemple comprise entre 100 et 300 m²/g et leur densité apparente peut notamment être comprise entre 0,05 et 0,5 g/cm³ et plus préférentiellement entre 0,1 1 et 0,2 g/cm³. Les nanotubes de carbone multiparois peuvent par exemple comprendre de 5 à 15 feuillets et plus préférentiellement de 7 à 10 feuillets.

Un exemple de nanotubes de carbone bruts est notamment disponible dans le commerce auprès de la société ARKEMA sous la dénomination commerciale Graphistrength® C100.

Les nanotubes peuvent être purifiés et/ou traités (en particulier oxydés) et/ou broyés, avant leur mise en oeuvre dans le procédé selon l'invention. Ils peuvent également être fonctionnalisés par des méthodes de chimie en solution comme l'amination ou la réaction avec des agents de couplage.

Le broyage des nanotubes peut être notamment effectué à froid ou à chaud et être réalisé selon les techniques connues mises en oeuvre dans des appareils tels que broyeurs à boulets, à marteaux, à meules, à couteaux, jet de gaz ou tout autre système de broyage susceptible de réduire la taille du réseau enchevêtré de nanotubes. On préfère que cette étape de broyage soit pratiquée selon une technique de broyage par jet de gaz et en particulier dans un broyeur à jet d'air.

La purification des nanotubes peut être réalisée par lavage à l'aide d'une solution d'acide sulfurique, ou d'un autre acide, de manière à les débarrasser d'éventuelles impuretés minérales et métalliques résiduelles, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

Dans le procédé selon l'invention, les nanotubes (bruts ou broyés et/ou purifiés et/ou oxydés et/ou fonctionnalisés par une molécule non plastifiante) sont mis en contact avec un agent plastifiant.

Par « agent plastifiant » on entend, au sens de la présente invention, un composé qui, introduit dans un polymère, augmente sa flexibilité, diminue sa température de transition vitreuse (Tg), augmente sa malléabilité et/ou son extensibilité.

Parmi les plastifiants cités ci-dessus, ceux préférés pour une utilisation dans la présente invention comprennent les sulfonamides, en particulier la N-butyl benzènesulfonamide (BBSA), la N-éthyl benzènesulfonamide (EBSA), la N-propyl benzènesulfonamide (PBSA), la N-butyl-N-dodécyl benzènesulfonamide (BDBSA), la N,N-diméthyl benzènesulfonamide (DMBSA), la para-méthylbenzène sulfonamide, l'ortho-toluènesulfonamide, la para-toluènesulfonamide ; les phtalates tels que les phtalates de di(2-éthylhexyle), de diisodécyle, de diméthyle, de dibutyle et de dioctyle ; les sébacates de dialkyles ; les adipates de dialkyles ; et les hydroxybenzoates d'alkyles tels que les hydroxybenzoates d'éthyle, de butyle ou d'hexadécyle ; et leurs mélanges.

Les plastifiants peuvent être utilisés à raison de 1 à 1000 % en poids, et de préférence de 20 à 200% en poids, par rapport au poids de nanotubes mis en oeuvre.

Le plastifiant se trouve généralement sous forme liquide, éventuellement à l'état fondu ou en solution dans un solvant. La mise en contact de celui-ci avec les nanotubes en poudre peut donc se faire par exemple par dispersion ou introduction directe par déversement du plastifiant dans la poudre de nanotubes (ou le contraire), par introduction goutte-à-goutte du plastifiant dans la poudre ou par nébulisation du plastifiant à l'aide d'un pulvérisateur sur la poudre de nanotubes. Cette étape peut être réalisée dans des réacteurs de synthèse traditionnels, des mélangeurs à pales, des réacteurs à lit fluidisé ou dans des appareils de mélange de type Brabender, mélangeur bras en Z ou extrudeuse. On préfère selon l'invention utiliser un mélangeur conique, par exemple de type Vrieco-Nauta d'HOSOKAWA, comprenant une vis rotative tournant le long de la paroi d'une cuve conique. La dispersion des nanotubes peut éventuellement être encore améliorée par passage dans un broyeur à boules ou à billes.

Au terme de ce procédé, et éventuellement après élimination du solvant (typiquement par évaporation), on obtient un pré-composite à base de nanotubes et de plastifiant.

L'invention a également pour objet le pré-composite susceptible d'être obtenu suivant le procédé ci-dessus.

Ce pré-composite est destiné à être introduit dans une composition de polymère pour former un matériau composite. En particulier, l'invention a également pour objet l'utilisation de ce pré-composite pour conférer au moins une propriété électrique, mécanique et/ou thermique à un matériau polymère.

L'invention a donc également pour objet un procédé de fabrication d'un matériau composite comprenant l'introduction du pré-composite tel que défini précédemment dans une composition de polymère. Celle-ci contient généralement au moins un polymère choisi parmi les homo- ou copolymères à gradients, à blocs, statistiques ou séquencés, thermoplastiques, thermodurcissables, rigides ou élastomériques, cristallins, amorphes ou semi-cristallins. On utilise de préférence selon l'invention au moins un polymère thermoplastique et/ou un élastomère.

Des exemples de polymères susceptibles d'être mis en oeuvre peuvent être choisis parmi : les homo- et copolymères d'oléfines tels que les copolymères acrylonitrile-butadiène-styrène, les copolymères éthylène-propylène-diène et les polyoléfines telles que le polyéthylène, le polypropylène, le polybutadiène et le polybutylène ; les homo- et copolymères acryliques et les poly(meth)acrylates d'alkyles tels que le poly(méthacrylate de méthyle) ; le polyéthylène chlorosulfoné ; le polyacrylonitrile ; les polyamides ; les polyimides ; les polycarbonates ; les polyesters dont le polytéréphtalate d'éthylène ; les polyéthers tels que le polyphénylène éther ; le polystyrène ; le poly(chlorure de vinyle) ; les polymères fluorés ; les caoutchoucs naturels ou synthétiques ; les polyuréthanes ; et leurs mélanges, sans que cette liste ne soit limitative. On peut en variante utiliser des polymères thermodurs.

Selon une forme d'exécution particulièrement préférée de l'invention, le polymère est choisi parmi les polyamides (PA), parmi lesquels on peut notamment citer le PA-6, le PA-11 et le PA-12, obtenus par polymérisation d'un aminoacide ou d'un lactame, le PA-6.6, le PA-4.6, le PA-6.10 et le PA-6.12, obtenus par polycondensation d'un diacide et d'une diamine, ainsi que les polyamides aromatiques tels que les polyarylamides et les polyphtalamides. Certains des polymères précités (PA-11, PA-12, PA aromatiques) sont notamment disponibles auprès de la société ARKEMA sous la dénomination commerciale RILSAN®.

Il est bien entendu que le choix du plastifiant utilisé selon la présente invention pour améliorer la dispersion des nanotubes dans une matrice polymère sera fonction de la nature chimique de la matrice à renforcer par les nanotubes. Le Tableau 1 ci-après donne à titre indicatif quelques exemples d'associations plastifiants/matrices polymères particulièrement appropriées.

**Tableau 1**

| | |
|---|---|
| **Exemples d'associations polymères/plastifiants** | |
| Type de polymère à renforcer | Exemple de plastifiant utilisable |
| Copolymère acrylonitrile-butadiène-styrène (ABS) | Alkylesters de phosphates, aryl sulfonamides |
| Acrylique pour adhésifs et revêtements | Phtalates (notamment d'alkylbenzyle ou de dioctyle) ; adipates de dialkyles ; alkylesters de phosphates |
| Acrylique pour autres applications | Phtalates de dialkyles ; adipates de dialkyles ; azélates ; sébacates |
| Polyméthacrylate de méthyle (PMMA) | Phtalates, notamment de di-(2-éthylhexyle) |
| Polyéthylène chlorosulfoné | Adipates, notamment de dioctyle ; sébacates, notamment de dioctyle |
| Copolymère styrène-éthylène-butadiène-styrène (SEBS) | Phtalates, notamment de dioctyle |
| Copolymère éthylène-propylène-diène (EPDM) | Phtalates, notamment de dibutyle ou de dioctyle |
| Caoutchouc naturel (SBR) | Sébacates, notamment de dioctyle ; phtalates, notamment de dibutyle ou de dioctyle |
| Polybutylène | Adipates, phtalates, pélargonates |
| Caoutchouc nitrile | Ethers de dibenzyle, phtalates, chloroparaffines, alkylphosphates |
| Polyacrylonitrile | Phtalates, notamment de dibutyle ; carbonate de propylène |
| Polyamides | Sulfonamides, notamment BBSA, EBSA, PBSA, BDBSA, DMBSA ; hydroxybenzoates ; phtalates, notamment de dioctyle ou de diisodécyle ; adipates, notamment de di-(2-éthylhexyle) ; phosphates, notamment de tri-(2-éthylhexyle) |
| Polyimides | Benzoates de glycol, notamment dibenzoate de diéthylèneglycol ; phtalates, notamment de diméthyle ; alkylesters de phosphates |
| Polycarbonates | Alkylesters de phosphates, phtalates |
| Polyesters (dont PET) | Phtalates |
| Polyphénylène éther | Phtalates |
| Polystyrène | Phtalates, phosphates, sébacates, adipates, azélates |
| Polyéthylène | Phtalates, notamment de dioctyle ; benzoates de glycérol, notamment tribenzoate de glycéryle |
| Polypropylène | Sébacates, notamment de dioctyle |
| Poly(chlorure de vinyle) (PVC) | Phtalates de dialkyles, adipates de dialkyles, azélates, sébacates |
| Polymère fluoré | Phtalates, adipates, azélates, sébacates |
| Polyuréthanes | Alkylesters de phosphates, phtalates |

La composition de polymère peut en outre renfermer divers adjuvants et additifs tels que des lubrifiants, des pigments, des stabilisants, des charges ou renforts, des agents anti-statiques, des fongicides, des agents ignifugeants et des solvants.

Les composites obtenus peuvent être utilisés pour la fabrication de boîtiers pour circuits électroniques, dans des tuyaux ou réservoirs de produits pétroliers ou carburants, pour la fabrication de sondes de mesure, pour la fabrication de pièces mécaniques pour l'automobile, l'aéronautique ou le nautique, ou encore pour la fabrication d'articles de sport.

La présente invention a également pour objet l'utilisation d'un plastifiant tel que défini ci-dessus pour améliorer la dispersion et/ou les propriétés mécaniques (notamment résistance à la traction et/ou à l'impact) et/ou la conductivité électrique et/ou la conductivité thermique de nanotubes dans une matrice polymère.

Il est ainsi possible de conférer auxdits composites renfermant moins de 1,5% en poids de nanotubes de carbone une conductivité électrique inférieure à 10⁶ ohm.

L'invention sera maintenant illustrée par les exemples non limitatifs suivants.

### EXEMPLES

### Exemple 1 : Préparation et propriétés d'un pré-composite NTC/plastifiant

On prépare un échantillon de NTC par Dépôt Chimique en phase Vapeur (CVD) à partir d'éthylène à 650°C, que l'on fait passer sur un catalyseur constitué de fer supporté sur de l'alumine. Le produit résultant de la réaction contient un taux de cendres, mesuré par perte au feu à 650°C sous air, de 7%. Cet échantillon, qui sera désigné par la suite par NTC1, contient 3% de Fe₂O₃ et 4% d'Al₂O₃, déterminés par analyse chimique.

Le pré-composite peut ensuite être obtenu de la manière suivante :
- introduction de 1500 g de différents lots de fabrication de la poudre de NTC1 dans un mélangeur de type HOSOKAWA Nauta Minimix 020-FFC-50, par l'intermédiaire du capot,
- démarrage de l'agitation à vitesse maximale (vitesse bras = 10 tours/min, vitesse vis = 300 tours/min),
- mélange pendant 5 minutes,
- injection de 1500 g de BBSA, par l'intermédiaire de deux pompes péristaltiques, l'introduction se faisant par deux piquages sur le sommet du mélangeur, les pompes étant réglées pour une durée d'introduction d'environ 30 mn,
- poursuite du mélange pendant 5 mn après l'injection, et
- vidange par la vanne de fond sous agitation dans des fûts en polyéthylène.

### Exemple 2 : Préparation d'un composite NTC/polyamide

On a dispersé à l'aide d'un co-malaxeur BUSS 10% du pré-composite de l'Exemple 1 dans du polyamide-12 Rilsan® AMNO TLD d'ARKEMA (grade de polyamide fluide) à un débit de 10 kg/h avec un profil de température de 210/250/250/250/240°C, pour obtenir un matériau composite renfermant 5% en poids de NTC et 5% en poids de plastifiant (BBSA).

### Exemple 3 : Propriétés mécaniques

Le composite de l'Exemple 2 a été extrudé sur une extrudeuse bi-vis de type microDSM (filière plate rectangulaire de 20 x 0.2 mm²), mise en oeuvre dans les conditions suivantes :
Température de consigne : 300°C
Température du mélange fondu : 285°C
Vitesse de rotation des vis : 100 tours/min
Temps de mélangeage : 30 sec
Filière : plate.

Des éprouvettes IFC ont ensuite été découpées à l'aide d'un emporte-pièce dans le film extrudé. Ces éprouvettes ont été soumises à des essais de traction, mis en oeuvre sur un dynamomètre MTS à une vitesse de 50 mm/min, en vue de comparer les propriétés mécaniques du composite à celles de composites fabriqués dans les mêmes conditions à partir de nanotubes de carbone (5% en poids) et de la même résine de polyamide, mais ne contenant pas de plastifiant. Les résultats de ces essais sont rassemblés dans le Tableau 2 ci-dessous.

**Tableau 2**

| **Propriétés mécaniques des composites NTC/(plastzfiantl)polyamide** | | | | | |
|---|---|---|---|---|---|
| Ex. | Composite | Contrainte à la rupture (MPa) | Allongement à la rupture (%) | Contrainte seuil (MPa) | Allongement seuil (%) |
| 3A | AMNO® LTD/Graphi-strength® C100 Lot 1 | 32 ± 5 | 52 ± 20 | 34 ± 7 | 8 ± 3 |
| 3C | Composite selon l'invention | 35 ± 6 | 65 ± 31 | 29 ± 4 | 12 ± 2 |

On constate donc que la présence de plastifiant n'altère pas sensiblement les propriétés mécaniques des composites.

### Exemple 4 : Mesure de la résistivité des composites obtenus selon l'invention

Le composite obtenu à l'Exemple 2 a été dilué à sec dans le même polyamide que celui utilisé pour sa fabrication, de manière à obtenir quatre composites renfermant de 0,5 à 3% en poids de NTC.

Ces composites ont ensuite été extrudés à 285°C sur une extrudeuse bi-vis de type microDSM (100 tours/mn, filière circulaire dite jonc), puis la résistance des joncs obtenus a été mesurée à l'aide d'un mégohmètre Sefelec M1500P et ramenée par calcul à la résistivité surfacique.

Un essai comparatif a été réalisé entre ce composite (« CNT/BBSA ») et :
- un composite A dépourvu de plastifiant et obtenu comme décrit ci-dessus, mais à partir de NTC produits selon la demande WO 86/03455 («Reference CNT - Hyperion Catalysis »), et
- un composite B dépourvu de plastifiant et obtenu comme décrit ci-dessus (« CNT »).

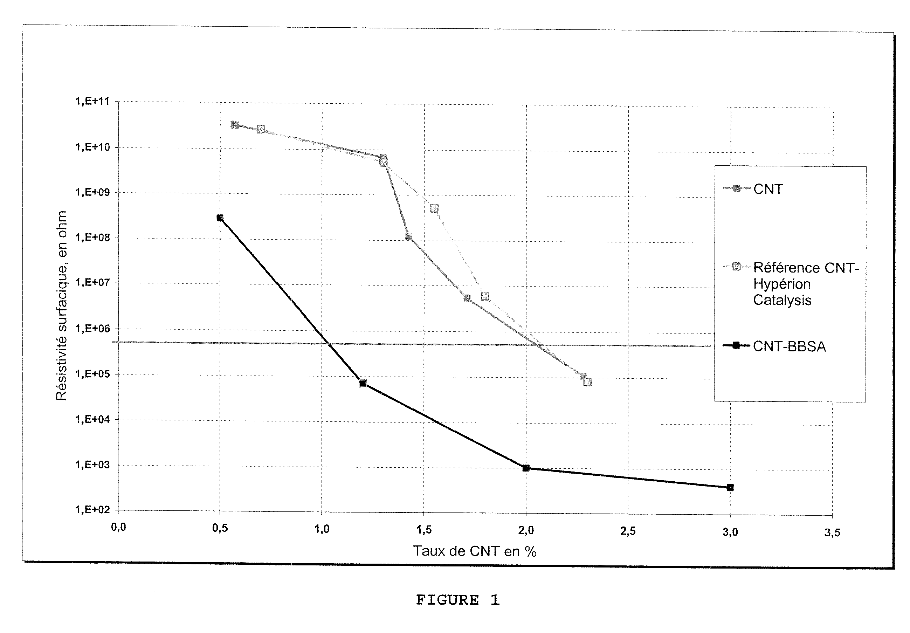

Les courbes de percolation résultantes sont illustrées à la Figure annexée.

### Résultats :

Comme illustré sur cette Figure, la résistivité des composites diminue lorsque le taux de NTC qu'ils renferment augmente. En outre, celle des composites obtenus selon l'invention reste toujours bien inférieure à celle des composites ne renfermant pas de plastifiant, ce qui traduit leur meilleure conductivité électrique et la meilleure dispersion des NTC dans ces composites selon l'invention. Le seuil de percolation des composites obtenus selon l'invention est également inférieur.

### Exemple 5 : Evaluation de la dispersion des NTC dans les composites obtenus selon l'invention

On a extrudé des joncs de matériaux composites à 5% de NTC dans le polyamide, obtenus selon l'invention et correspondant au Composite B de l'Exemple 4. Des clichés ont ensuite été pris au microscope optique en lumière transmise à partir de coupes d'épaisseur 2 µm réalisées parallèlement au sens d'extrusion, à raison de 6 clichés par coupe, au grossissement nominal de 200X. On a alors évalué le pourcentage de la surface de ces matériaux composites occupée par des agrégats de NTC. La moyenne des valeurs obtenues pour chacun des 6 clichés a été calculée.

Les résultats obtenus sont rassemblés dans le Tableau 3 ci-dessous.

**Tableau 3**

| | Composite B | Composite obtenu selon l'invention |
|---|---|---|
| % de surface moyen occupé par les agglomérats de NTC | 1,69% | 0,50% |

On constate donc que les composites obtenus selon l'invention présentent une meilleure dispersion des NTC dans la matrice polyamide, qui devrait résulter en de meilleures propriétés mécaniques telles que leur résistance à 'L'impact ou à la fissuration, notamment.

## Revendications

1. Procédé de préparation d'un pré-composite à base de nanotubes, comprenant la mise en contact desdits nanotubes avec au moins un agent plastifiant choisi parmi :
- les alkylesters de phosphates, d'acide hydroxybenzoïque (dont le groupe alkyle, de préférence linéaire, renferme de 1 à 20 atomes de carbone), d'acide azélaïque et d'acide pélargonique,
- les phtalates, notamment de dialkyle ou d'alkyl-aryle, en particulier d'alkylbenzyle, les groupes alkyles, linéaires ou ramifiés, renfermant indépendamment de 1 à 12 atomes de carbone,
- les adipates, notamment de dialkyles,
- les sébacates, notamment de dialkyles et en particulier de dioctyle,
- les benzoates de glycols ou de glycérol,
- les éthers de dibenzyle,
- les chloroparaffines,
- le carbonate de propylène,
- les sulfonamides, en particulier les aryl sulfonamides dont le groupe aryle est éventuellement substitué par au moins un groupe alkyle contenant de 1 à 6 atomes de carbone, telles que les benzene sulfonamides et les toluene sulfonamides, qui peuvent être N-substituées ou N,N-disubstituées par au moins un groupe alkyle, de préférence linéaire, renfermant de 1 à 20 atomes de carbone, et
- leurs mélanges.

2. Procédé selon la revendication 1, **caractérisé en ce que** les nanotubes sont des nanotubes de carbone.

3. Procédé selon la revendication 2, **caractérisé en ce que** les nanotubes de carbone sont susceptibles d'être obtenus par un procédé de dépôt chimique en phase vapeur.

4. Procédé selon l'une quelconque des revendications 1 à 3, **caractérisé en ce que** les nanotubes ont un diamètre allant de 0,1 à 100 nm, de préférence de 0,4 à 50 nm et, mieux, de 1 à 30 nm.

5. Procédé selon l'une quelconque des revendications 1 à 4, **caractérisé en ce que** les nanotubes ont une longueur de 0,1 à 20 µm.

6. Procédé selon l'une quelconque des revendications 1 à 5, **caractérisé en ce que** les nanotubes sont des nanotubes bruts, purifiés à l'aide d'une solution d'acide sulfurique, oxydés à l'aide d'une solution d'hypochlorite de sodium, broyés à l'aide d'un broyeur à jet d'air et/ou fonctionnalisés à l'aide d'une molécule non plastifiante.

7. Procédé selon l'une quelconque des revendications 1 à 6, **caractérisé en ce que** ledit plastifiant est choisi parmi les sulfonamides ; les phtalates ; les sébacates de dialkyles ; les adipates de dialkyles ; et les hydroxybenzoates d'alkyles ; et leurs mélanges.

8. Procédé selon la revendication 7, **caractérisé en ce que** le plastifiant est choisi parmi : la N-butyl benzènesulfonamide (BBSA), la N-éthyl benzènesulfonamide (EBSA), la N-propyl benzènesulfonamide (PBSA), la N-butyl-N-dodécyl benzènesulfonamide (BDBSA), la N,N-diméthyl benzènesulfonamide (DMBSA), la para-méthylbenzène sulfonamide, l'ortho-toluènesulfonamide, la para-toluènesulfonamide, les phtalates de di(2-éthylhexyle), de diisodécyle, de diméthyle, de dibutyle et de dioctyle et les hydroxybenzoates d'éthyle, de butyle ou d'hexadécyle, et leurs mélanges.

9. Procédé selon l'une quelconque des revendications 1 à 8, **caractérisé en ce que** le plastifiant est utilisé à raison de 1 à 1000% en poids, de préférence de 20 à 200% en poids, par rapport au poids de nanotubes mis en oeuvre.

10. Pré-composite susceptible d'être obtenu suivant le procédé selon l'une quelconque des revendications 1 à 9.

11. Utilisation du pré-composite selon la revendication 10 pour conférer au moins une propriété électrique, mécanique et/ou thermique à un matériau polymère.

12. Procédé de fabrication d'un matériau composite comprenant l'introduction du pré-composite selon la revendication 10 dans une composition de polymère.

13. Procédé selon la revendication 12, **caractérisé en ce que** le polymère est choisi parmi : les homo- et copolymères d'oléfines tels que les copolymères acrylonitrile-butadiène-styrène, les copolymères éthylène-propylène-diène et les polyoléfines telles que le polyéthylène, le polypropylène, le polybutadiène et le polybutylène ; les homo- et copolymères acryliques et les poly(meth)acrylates d'alkyles tels que le poly(méthacrylate de méthyle) ; le polyéthylène chlorosulfoné ; le polyacrylonitrile ; les polyamides ; les polyimides ; les polycarbonates ; les polyesters dont le polytéréphtalate d'éthylène ; les polyéthers tels que le polyphénylène éther ; le polystyrène ; le poly(chlorure de vinyle) ; les polymères fluorés ; et les polyuréthanes.

14. Procédé selon la revendication 13, **caractérisé en ce que** le polymère est un polyamide.

15. Utilisation d'un plastifiant tel que défini dans la revendication 1 pour améliorer la dispersion et/ou les propriétés mécaniques et/ou la conductivité électrique et/ou la conductivité thermique de nanotubes dans une matrice polymère.
